# EUROPEAN PATENT APPLICATION

(11) **EP 2 840 751 A1**
(43) Date of publication of application: **25.02.2015**
(21) Application number: 13777526.8
(22) Date of filing: 12.03.2013
(51) Int. Cl.: H04L 29/02

(54) **TERAHERTZ WIRELESS COMMUNICATIONS-BASED METHOD AND SYSTEM FOR DATA TRANSMISSION**

(30) Priority: 19.04.2012 CN 201210115961
(71) Applicant: Huizhou TCL Mobile Communication Co., Ltd., HuiZhou, Guangdong 516006 (CN)
(72) Inventor: WANG, Kailong, Huizhou Guangdong 516006 (CN); LI, Xianglai, Huizhou Guangdong 516006 (CN); GE, Qi, Huizhou Guangdong 516006 (CN)
(74) Representative: Brachmann, Roland W.
(86) International application number: PCT/CN2013/072475
(87) International publication number: WO 2013/155907

(57) **Abstract**

The present invention has a first terahertz storage device and a second terahertz storage device placed within an effective distance to each other, and, by means of connection and pairing between the first terahertz storage device and the second terahertz storage device, has data in the first terahertz storage device transmitted to the second terahertz storage device via a terahertz wireless signal, thus implementing rapid and secure transmission of the data between the two storage devices, and allowing completion of transmission and exchange of the data in a scenario in which a transmission medium cannot be released.

## Description

### FIELD OF THE INVENTION

The present invention relates to the field of information technology, and in particular, to a terahertz wireless communications-based method and a system for data transmission.

### BACKGROUND OF THE INVENTION

The traditional data type generally refers to structured data which can be realized through logical expression of a two-dimensional table structure. A traditional data transmission mode based on wired transmission relational database is capable to adapt to this type of data. However, with the advent of the mobile Internet era, data on microblogs, online community, email and PPT presents an outburst growth, and the data on the mobile Internet has the new "unstructured" and "bulky" characteristics. The traditional data transmission mode based on wired transmission relational database requires wired transmission, which has limited data handling capacity and slow data transmission rate, and cannot adapt to the demands of these new characteristics. Therefore, the prior art still needs to be improved and developed.

### SUMMARY OF THE INVENTION

In view of the defects of the foregoing prior art, the present invention aims at providing a terahertz wireless communications-based method and a system for data transmission, to solve the problems that the existing data node requires wired transmission, which has limited data handling capacity, slow data transmission rate, and the like.

The technical solution of the present invention is as follows:

A terahertz wireless communications-based method for data transmission, comprises the following steps of:
A. placing the second terahertz storage device within a terahertz wireless signal search range of the first terahertz storage device, wherein the first terahertz storage device and the second terahertz storage device mutually detect whether the opposite side has a function of transmitting data through a terahertz wireless signal; if both the first and the second terahertz storage device detect mutually that the opposite side has the function of transmitting data through the terahertz wireless signal, connection and pairing are performed between the first terahertz storage device and the second terahertz storage device; and
B. when the connection and paring are successful, sending, by the first terahertz storage device, the data to the second terahertz storage device through the terahertz wireless signal according to the user instruction.

A terahertz wireless communications-based method for data transmission, comprises the following steps of:
A. placing the second terahertz storage device within a terahertz wireless signal search range of the first terahertz storage device, and performing connection and pairing between the first and the second terahertz storage device; and
B. when the connection and paring are successful, sending, by the first terahertz storage device, the data to the second terahertz storage device through the terahertz wireless signal according to the user instruction.

A terahertz wireless communications-based system for data transmission, comprises:
- the first terahertz storage device, used for being connected and paired with the second terahertz storage device, and sending data to the second terahertz storage device via a terahertz wireless signal according to the user instruction; and
- the second terahertz storage device, used for receiving the data sent by the first terahertz storage device via the terahertz wireless signal.

The present invention has the advantageous effects that: the terahertz wireless communications-based method and the system for data transmission of the present invention implement rapid transmission of the data between the two storage devices, match with a novel data interactive model in the terahertz storage device, and can perform data interaction quickly, stably and securely. In addition, the present invention implements optimization on a physical structure of a product thanks to wireless transmission, thus allowing completion of transmission and exchange of the data in a scenario in which a transmission medium cannot be released. Moreover, the present invention further provides a bulk transmission service manager, which may manage an unstructured bulk data transmission process when being compared with the traditional relational database, and meet the demands of unstructured bulk data processing and mining.

### BRIEF DESCRIPTION OF DRAWINGS

- FIG.1: is a flow chart of a preferred embodiment of a terahertz wireless communications-based method for data transmission according to the present invention.
- FIG.2: is a flow chart of a preferred embodiment for a connecting and pairing process in the terahertz wireless communications-based method for data transmission shown in FIG.1.
- FIG.3: is a flow chart of a preferred embodiment for a data transmission process in the terahertz wireless communications-based method for data transmission shown in FIG.1.
- FIG.4: is a structure diagram of a preferred embodiment of a terahertz wireless communications-based system for data transmission according to the present invention.

### DETAILED DESCRIPTION OF THE EMBODIMENTS

The present invention provides a terahertz wireless communications-based method and a system for data transmission. To make the objective, technical solution and advantages of the present application more clear, the present invention is further described in details hereinafter. It should be understood that the specific embodiments described here are merely used to explain the present invention, but are not intended to limit the present invention.

The terahertz wireless communications-based method and the system for data transmission of the present invention has the first terahertz storage device and the second terahertz storage device placed within an effective distance to each other, and, by means of connection and pairing between the first terahertz storage device and the second terahertz storage device, has data in the first terahertz storage device transmitted to the second terahertz storage device via a terahertz wireless signal.

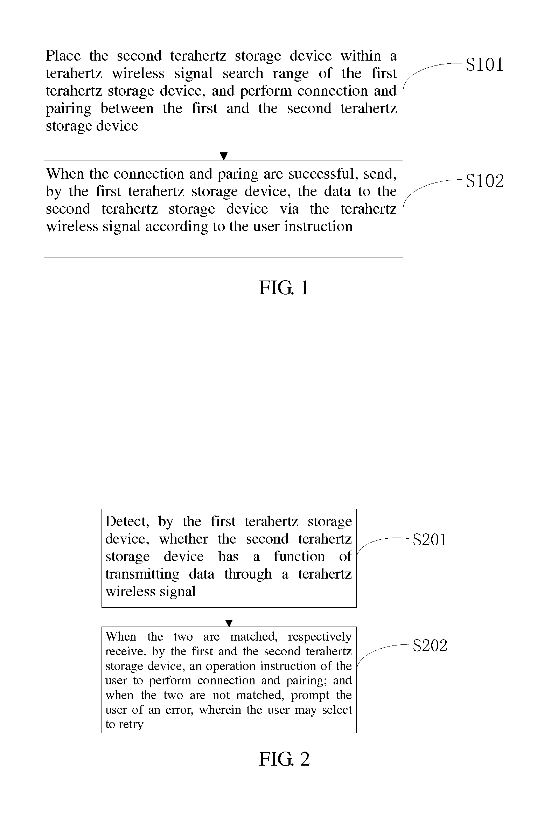

FIG.1 is a flow chart of a preferred embodiment of a terahertz wireless communications-based method for data transmission according to the present invention, which mainly comprises the following steps of:
S101. when data transmission is required, placing the second terahertz storage device within a terahertz wireless signal search range of the first terahertz storage device, and performing connection and pairing between the first terahertz storage device and the second terahertz storage device.

Both the first terahertz storage device and the second terahertz storage device in the step are required to support the terahertz wireless communications. Actually, the first terahertz storage device and the second terahertz storage device may be respectively called as the first node and the second node; high speed data transmission may be performed between the two nodes. Moreover, the data transmission is bilateral; that is, the second terahertz storage device may also transmit data to the first terahertz storage device, wherein the data may be unstructured bulk data. The second terahertz storage device may be a common mobile optical disk, a mobile hard disk, a mobile flash memory or an intelligent terminal, which is used for receiving data from the first terahertz storage device. While the first terahertz storage device may be a bulk storage database, in which bulk data is stored. Because the bulk storage database carries multiple bovenliggende business functions, the user usually understands the relationship between the bulk storage database and an ordinary storage device as a master-slave relationship between a server and a client. But actually, the bulk storage database is still a node that is equivalent to other storage device, and all the data transmission between any two nodes is of a point-to-point coordinating relationship. Therefore, in the present invention, it is not simply that the first terahertz storage device transmits data to the second terahertz storage device; and the second terahertz storage device may also transmit the data stored therein to the first terahertz storage device as long as the first and the second terahertz storage device are storage devices, namely, effective terahertz storage devices that support the terahertz wireless communications.

During actual application, the first and the second terahertz storage device need to be placed within a certain distance, wherein the distance is the effective distance of the terahertz wireless communications. Because the coverage area of the terahertz wireless signal is limited, the two terahertz storage devices need to be placed within the effective distance so that such processes as connection and pairing, data transmission, and the like may be performed.

The first and the second terahertz storage device need to validate each other so as to guarantee the security of the data transmission. When the connection and pairing between the first and the second terahertz storage device are not successful, a connection and pairing error is prompted, or a dialog will appear to the user. The user selects whether to perform connection and pairing again. A prompting body may either be the first or the second terahertz storage device. When the connection and pairing between the first and the second terahertz storage device are successful, following data transmission process may be performed.

S102. when the connection and paring are successful, sending, by the first terahertz storage device, the data to the second terahertz storage device through the terahertz wireless signal according to the user instruction.

After the connection and paring between the first and the second terahertz storage device are successful, a connection is thus established between the first and the second terahertz storage device, and then data transmission may be performed according to the user instruction, wherein the data transmission is specifically performed through a terahertz wireless signal. A terahertz (Thz) wave is namely a terahertz ray, which is an electromagnetic wave having a electromagnetism frequency between 0.1 THz and 10THz (wavelength is between 3mm and 30um), and a wave range between microwave and far infrared rays. Based on the characteristics of larger transmission capacity and better directivity of the terahertz (THz) wireless communications, the transmission rate of the terahertz wave may reach 10Gbps; therefore, the terahertz wave can realize the transmission of structured bulk data. The present invention can implement data transmission more quickly, securely and stably.

The present invention may implement point-to-point data transmission. That is, one first terahertz transmission device may transmit data to a plurality of second terahertz transmission devices at the same time, thus greatly improving the data transmission efficiency.

FIG.2 is a flow chart of a preferred embodiment of a connection and pairing process in the terahertz wireless communications-based method for data transmission according to the present invention shown in FIG.1, which mainly comprises the following steps of:
S201. detecting, by the first terahertz storage device, whether the second terahertz storage device has a function of transmitting data through a terahertz wireless signal.

When the first and the second terahertz storage device are placed within an effective distance, the first terahertz storage device detects whether the second terahertz storage device is effective. The former mainly detects whether the latter may receive or send data through a terahertz wireless signal. The process may be mutual; that is, the second terahertz storage device may also detect whether the first terahertz storage device is effective. A following step cannot be performed only when the two are matched.

S202. when the two are matched, respectively receiving, by the first and the second terahertz storage device, an operation instruction of the user to perform connection and paring; and when the two are not matched, prompting the user of an error, wherein the user may select to retry.

When the detecting result is that the second terahertz storage device is an effective one, the connection and pairing are performed between the first and the second terahertz storage device immediately, and pairing may be specifically performed through exchanging pairing codes. Pairing code exchange refers to that the two devices mutually validate the pairing codes. When the pairing codes of the first and the second terahertz storage device are identical to each other, the two are mutually validated, and security validation for data transmission is acquired, so that data transmission may be performed securely. This process ensures the security and reliability of the data transmission. When it is detected that second terahertz storage device does not have the function of transmitting data through the terahertz wireless signal, the invalidity of the device is prompted to the user, and the user may select whether to retry.

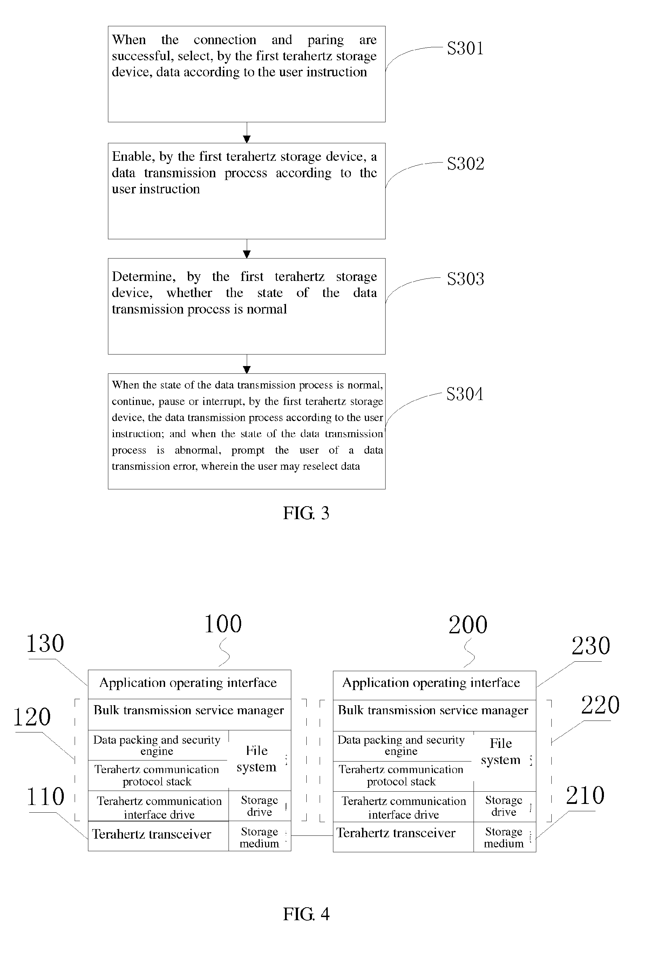

FIG.3 is a flow chart of a preferred embodiment of a data transmission process in the terahertz wireless communications-based method for data transmission according to the present invention shown in FIG.1, which mainly comprises the following steps of:
S301. when the connection and paring are successful, selecting, by the first terahertz storage device, data according to the user instruction, wherein the process refers to that the user selects data requiring to be transmitted in advance, and the first terahertz storage device selects the data according to the selection situation of the user.

S302. enabling, by the first terahertz storage device, a data transmission process according to the user instruction, wherein after the user selects the data requiring to be transmitted, the first terahertz storage device may prompt the user whether to enable the data transmission process, and perform the data transmission process if the user selects yes; or the user, after finding that the selected data is wrong, may select to not enable the data transmission process and reselect correct data for transmission.

S303. determining, by the first terahertz storage device, whether the state of the data transmission process is normal, wherein during the data transmission process, the first terahertz storage device may determine whether the state of the data transmission process is normal. Specific indexes for reference comprise transmission progress, transmission rate, and the like; in this way, the user may view whether the data transmission process is normal, and when a problem exists, the user may conveniently handle the problem in time.

S304. when the state of the data transmission process is normal, continuing, pausing or interrupting, by the first terahertz storage device, the data transmission process according to the user instruction; and when the state of the data transmission process is abnormal, prompting the user of a data transmission error or prompting the user to retry, wherein the user may reselect data so as to realize data transmission. This process is namely equivalent to provide the user with an application interactive interface on which the user may perform such operations as enabling, pausing or interrupting the data transmission process. Meanwhile, the first terahertz storage device may also prompt the user of the state and the parameter of the data transmission process, for example, some related indexes as transmission progress, transmission rate, error instruction, remaining time or file path, etc.

The specific steps of the transmission process of the present invention take the first terahertz storage device as a master. During specific application, the second terahertz storage device may also be taken as a master. That is, the user operates on the second terahertz storage device, and the second terahertz storage device selects to enable, continue, pause or interrupt the data transmission process according to the instruction, or the second terahertz storage device detects the state of the data transmission process. The literal sense of the present invention is that the two terahertz storage devices are two peer nodes, rather than in a master-slave relationship.

The present invention also provides a terahertz wireless communications-based system for data transmission. As shown in FIG.4, the system mainly comprises the first terahertz storage device 100 and the second terahertz storage device 200. The first terahertz storage device 100 is used for being connected and paired with the second terahertz storage device 200, and sends data to the second terahertz storage device 200 through a terahertz wireless signal according to the user instruction. The second terahertz storage device 200 is used for receiving the data sent by the first terahertz storage device through the terahertz wireless signal. The second terahertz storage device 200 is within the terahertz wireless signal search range of the first terahertz storage device 100.

Both the first terahertz storage device 100 and the second terahertz storage device 200 are storage devices that support the terahertz wireless communications. Both the first terahertz storage device 100 and the second terahertz storage device 200 are provided with three function units: the first function unit, the second function unit and the third function unit. As shown in FIG.4, in order to distinguish conveniently, the first function unit, the second function unit and the third function unit of the first terahertz storage device 100 are respectively marked as 110, 120 and 130, and the first function unit, the second function unit and the third function unit of the second terahertz storage device 200 are respectively marked as 210, 220 and 230. Because the first and the second terahertz storage device are terahertz devices having the same structures and principles, only the first function unit 110, the second function unit 120 and the third function unit 130 of the first terahertz storage device are described in details hereinafter.

The first function unit 110 is a hardware layer, which mainly comprises a terahertz transceiver and storage medium, wherein the terahertz transceiver is used for receiving and sending the data through the terahertz wireless signal, and the storage medium is used for storing the data. The storage medium may be such storable non-volatile data medium as a mobile hard disk, a mobile optical disk, a mobile flash memory or an intelligent terminal and the like.

The second function unit 120 is a software layer, which is used for implementing the function of the first function unit which is namely the hardware layer. The second function unit mainly comprises a terahertz communication interface drive, a terahertz protocol stack, a data packing and security engine, a file system and a storage drive.

The terahertz communication interface drive is used for controlling the terahertz transceiver to receive and send data. The terahertz transceiver is used for receiving and sending data. The terahertz protocol stack is used for performing protocol layer data processing on the data, for example, performing such protocol layer data processing as paring, retransmission, unpacking or recombination and the like. The data packing and security engine is used for packing, unpacking, encrypting and decrypting the data, which mainly packs, unpacks, encrypts and decrypts the original data from the view of transmission efficiency and security.

The store function in the present invention may follow the existing storage mode; that is, the storage drive calls in a file access interface of the storage medium for the file system; the file system provides a standard file access interface, such as a bulk transmission service manager or an application interactive interface, to a top-level function layer in an operating system.

The working principle of the second function unit 120 is as follows: when the terahertz storage device externally transmits a data file, the storage drive calls in the file access interface of the storage medium for the file system so as to read the data stored in the storage medium; the data, after reading, is transmitted to the data packing and security engine through the standard file access interface of the file system; the data requiring to be transmitted is packed and encrypted by the data packing and security engine and flows in the terahertz communication protocol stack; after the terahertz communication protocol stack performs protocol layer data processing on the data, the terahertz communication interface drive controls the terahertz transceiver to send the data. When the terahertz storage device receives the data, the terahertz communication interface drive controls the terahertz transceiver to receive the data, and processes the data through the terahertz communication protocol stack; afterwards, the data is decrypted and unpacked by a data packing and security engine module to acquire the original data, and the data is written in the storage medium through the file system and the storage drive, thus implementing the storage of the data.

The third function unit 130 is an application interactive interface for user operation. The user may perform such operations as enabling, pausing or interrupting the data transmission process on the application interactive interface. Meanwhile, during the data transmission process, the first terahertz storage device may also prompt the user of the state and the parameter of the data transmission process, for example, some related indexes as transmission progress, transmission rate, error instruction, remaining time or file path, etc.

The second function unit 120 in the present invention is further provided with a specialized service layer which aims at effectively managing the data transmission function of the terahertz storage device. The service layer is called as a bulk transmission service manager. The bulk transmission service manager is responsible for performing priority scheduling on the data to be transmitted, and particularly, for managing the unstructured bulk data, for example, the bulk transmission service manager may preferentially transmit the important or urgent data according to the situations when the first terahertz storage device transmits a lot of bulk data to the second terahertz storage device. When the terahertz storage device externally transmits a data file, the bulk transmission service manager calls in the file access interface of the file system to read the data; the data to be read is packed and encrypted by the data packing and security engine and flows in the terahertz communication protocol stack; the terahertz communication protocol stack performs protocol layer data processing on the data, and the terahertz communication interface drive controls the terahertz transceiver to send the data. The terahertz storage device receives a data file according to the steps reversed to the foregoing process, wherein the terahertz communication interface drive receives the data, and processes the data through the terahertz communication protocol stack; afterwards, the data is decrypted and unpacked by the data packing and security engine module to acquire the original data, and the data is written in the storage medium through the file system and the storage drive, thus implementing the storage of the data.

Compared with traditional relational database, the bulk transmission service manager may manage an unstructured bulk data transmission process and meet the demands of unstructured bulk data processing and mining. Data in the present invention is mainly based on unstructured bulk data, which is information stored in the file system rather than a database. In the mobile Internet development trend, the growing rate of the unstructured data is far greater than that of the structured data (based on a relational database). The method for data transmission provided by the present invention is just based on the unstructured bulk data, which caters to the mobile Internet development trend, and can better meet the demands of the unstructured bulk data processing and mining.

The terahertz wireless communications-based method and the system for data transmission of the present invention has the first terahertz storage device and the second terahertz storage device placed within an effective distance to each other, and, by means of connection and pairing between the first terahertz storage device and the second terahertz storage device, has data in the first terahertz storage device transmitted to the second terahertz storage device via a terahertz wireless signal. The present invention implements rapid transmission of the data between the storage devices, match with a novel data interactive model in the terahertz storage device, and can perform data interaction quickly, stably and securely. In addition, the present invention implements optimization on a physical structure of a product due to wired transmission, thus allowing completion of transmission and exchange of the data in a scenario in which a transmission medium cannot be released.

It should be understood that applications of the present invention are not limited to the foregoing examples. A person having ordinary skill in the art may improve or transform the present invention according to the foregoing descriptions. All improvements and transformations shall fall within the protection scope of the claims of the present invention.

## Claims

1. A terahertz wireless communications-based method for data transmission, comprising the following steps of:
A. placing the second terahertz storage device within a terahertz wireless signal search range of the first terahertz storage device, wherein the first and the second terahertz storage device mutually detect whether the opposite side has a function of transmitting data through a terahertz wireless signal; if both the first terahertz storage device and the second terahertz storage device defect mutually that the opposite side has the function of transmitting data through the terahertz wireless signal, connection and pairing are performed between the first and the second terahertz storage device; and
B. when the connection and paring are successful, sending, by the first terahertz storage device, the data to the second terahertz storage device through the terahertz wireless signal according to the user instruction.

2. The terahertz wireless communications-based method for data transmission according to claim 1, wherein in the step A, the number of the first terahertz storage device is one, and the number of the second terahertz storage device is at least one.

3. The terahertz wireless communications-based method for data transmission according to claim 1, wherein the step B specifically comprises the steps of:
B1. when the connection and paring are successful, selecting, by the first terahertz storage device, data according to the user instruction;
B2. enabling, by the first terahertz storage device, a data transmission process according to the user instruction;
B3. determining, by the first terahertz storage device, whether the state of the data transmission process is normal; and
B4. if the state of the data transmission process is normal, controlling, by the first terahertz storage device, the data transmission process according to the user instruction; and if the state of the data transmission process is abnormal, prompting the user of a data transmission error.

4. The terahertz wireless communications-based method for data transmission according to claim 3, wherein in the step B4, if the state of the data transmission process is normal, the first terahertz storage device further prompts the user of the state and the parameter of the data transmission process.

5. The terahertz wireless communications-based method for data transmission according to claim 1, wherein in the step A, when the connection and pairing are performed between the first and the second terahertz storage device, pairing is performed through exchanging pairing codes; when the pairing codes of the first and the second terahertz storage device are identical, the connection and pairing are successful.

6. A terahertz wireless communications-based method for data transmission, comprising the following steps of:
A, placing the second terahertz storage device within a terahertz wireless signal search range of the first terahertz storage device, and performing connection and pairing between the first and the second terahertz storage device; and
B, when the connection and paring are successful, sending, by the first terahertz storage device, the data to the second terahertz storage device through the terahertz wireless signal according to the user instruction.

7. The terahertz wireless communications-based method for data transmission according to claim 6, wherein in the step A, the number of the first terahertz storage device is one, and the number of the second terahertz storage device is at least one.

8. The terahertz wireless communications-based method for data transmission according to claim 6, wherein the performing connection and pairing between the first and the second terahertz storage device in the step A specifically comprises the steps of:
A1. detecting, by the first terahertz storage device, whether the second terahertz storage device has a function of transmitting data through a terahertz wireless signal; and
A2. if the second terahertz storage device has the function of transmitting data through the terahertz wireless signal, performing connection and pairing between the first and the second terahertz storage device respectively by accepting an operation construction of the user; and if the second terahertz storage device does not have the function of transmitting data through the terahertz wireless signal, prompting the user of an error.

9. The terahertz wireless communications-based method for data transmission according to claim 6, wherein the step B specifically comprises the steps of:
B1. when the connection and paring are successful, selecting, by the first terahertz storage device, data according to the user instruction;
B2. enabling, by the first terahertz storage device, a data transmission process according to the user instruction;
B3. determining, by the first terahertz storage device, whether the state of the data transmission process is normal; and
B4. if the state of the data transmission process is normal, controlling, by the first terahertz storage device, the data transmission process according to the user instruction; and if the state of the data transmission process is abnormal, prompting the user of a data transmission error.

10. The terahertz wireless communications-based method for data transmission according to claim 9, wherein in the step B4, if the state of the data transmission process is normal, the first terahertz storage device further prompts the user of the state and the parameter of the data transmission process.

11. The terahertz wireless communications-based method for data transmission according to claim 6, wherein in the step A, when the connection and pairing are performed between the first and the second terahertz storage device, pairing is performed through exchanging pairing codes; when the pairing codes of the first and the second terahertz storage device are identical, the connection and pairing are successful.

12. A terahertz wireless communications-based system for data transmission, comprising:
- the first terahertz storage device, used for being connected and paired with the second terahertz storage device, and sending data to the second terahertz storage device through a terahertz wireless signal according to the user instruction; and
- the second terahertz storage device, used for receiving the data sent by the first terahertz storage device through the terahertz wireless signal.

13. The terahertz wireless communications-based system for data transmission according to claim 12, wherein:
- both the first and the second terahertz storage device are provided with three function units: the first function unit, the second function unit and the third function unit, wherein:
- the first function unit is a hardware layer, which comprises a terahertz transceiver and a storage medium, wherein the terahertz transceiver is used for receiving and sending the data through the terahertz wireless signal, and the storage medium is used for storing the data;
- the second function unit is a software layer, which is used for implementing the function of the first function unit; and
- the third function unit is an application interactive interface for user operation.

14. The terahertz wireless communications-based system for data transmission according to claim 13, wherein the second function unit comprises a terahertz communication interface drive, a terahertz protocol stack, a data packing and security engine, a file system and a storage drive, wherein:
- the terahertz communication interface drive is used for controlling the terahertz transceiver to receive and send data;
- the terahertz communication protocol stack is used for performing protocol layer data processing on the data transmitted by the data packing and security engine and the terahertz transceiver;
- the data packing and security engine is used for performing corresponding processing on the data transmitted by the file system and the terahertz communication protocol stack; and
- the file system and the storage drive are used for calling in the data in the storage medium.

15. The terahertz wireless communications-based system for data transmission according to claim 14, wherein the file system and the storage drive are further is used for storing the packed and encrypted data in the storage medium.

16. The terahertz wireless communications-based system for data transmission according to claim 13, wherein the second function unit further comprises a bulk transmission service manager used for managing data transmission.

17. The terahertz wireless communications-based system for data transmission according to claim 13, wherein the application interactive interface controls a data transmission process according to the user instruction, and the application interactive interface further provides the state and the parameter of the data transmission process.
